Europäisches Patentamt

European Patent Office

Office européen des brevets

(11) Veröffentlichungsnummer: **0 012 944**
**B1**

(12) **EUROPÄISCHE PATENTSCHRIFT**

(45) Veröffentlichungstag der Patentschrift:
23.06.82·

(21) Anmeldenummer: 79105140.2

(22) Anmeldetag: 13.12.79

(51) Int. Cl.³: **C 09 B 67/22,** C 09 B 69/04,
C 09 B 29/33

(54) **Rekristallisationsstabile farbstarke Monoazopigmentgemische, Verfahren zu ihrer Herstellung und ihre Verwendung.**

(30) Priorität: 20.12.78 DE 2854974·

(43) Veröffentlichungstag der Anmeldung:
09.07.80 Patentblatt 80/14

(45) Bekanntmachung des Hinweises auf die Patenterteilung:
23.06.82 Patentblatt 82/25

(84) Benannte Vertragsstaaten:
**BE CH DE FR GB IT**

(56) Entgegenhaltungen:
**DE-A-2 135 468**
**FR-A-2 084 545**
**FR-A-2 183 965**
**FR-A-2 213 966**
**FR-A-2 285 443**
**DERWENT JAPANESE PATENTS REPORT, 1970,
Band P,
Nr. 17, Seite 4, Derwent Publications Ltd,
London, WC1X8RP, GB**

(73) Patentinhaber: **HOECHST AKTIENGESELLSCHAFT,
Postfach 80 03 20, D-6230 Frankfurt/Main 80 (DE)**

(72) Erfinder: **Ehl, Klaus, Dr., Geisenheimer Strasse 92,
D-6000 Frankfurt am Main 71 (DE)**
Erfinder: **Deubel, Reinhold, Dr., Geierfeld 51, D-6232 Bad
Soden am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 0 012 944

## Rekristallisationsstabile farbstarke Monoazopigmentgemische, Verfahren zu ihrer Herstellung und ihre Verwendung

Es ist bekannt, daß man durch Kupplung von Diazoniumsalzen aromatischer Amine mit Kupplungskomponenten aus der Reihe der Acetessigsäurearylamide zahlreiche Pigmente herstellen kann. Diese Pigmente finden ausgedehnte Anwendung im graphischen Gewerbe, für Lacke und Anstrichmittel sowie für den textilen Pigmentdruck.

In manchen organischen Lösemitteln bzw. lösemittelhaltigen Bindemitteln zeigen derartige Pigmente jedoch eine gewisse Löslichkeit, die sich sehr nachteilig auf ihre Verwendbarkeit auswirken kann. So zeigt sich beispielsweise, daß beim Dispergieren mancher Pigmente in Lackbindemitteln die Farbstärke mit Zunahme der Dispergierzeit zunächst ansteigt, um nach Durchlaufen eines Maximums wieder deutlich abzufallen. Temperaturerhöhung und mechanische Beanspruchung, z. B. durch Rühren oder Mahlen in der Perlmühle, beschleunigen diesen Vorgang. Ebenso sinkt die Farbstärke beim Lagern des fertigen Lackes ab, wiederum besonders rasch bei erhöhter Temperatur. Die Farbstärkeverluste sind meist verbunden mit abnehmender Transparenz, oft auch mit Veränderungen des Farbtones.

Verantwortlich für diese unerwünschten Vorgänge bei der Herstellung und Lagerung solcher Lacke ist die Rekristallisation der dispergierten Pigmentteilchen in den vorhandenen Lösemitteln. Hierbei werden auf Grund bekannter physikalischer Zusammenhänge insbesondere die kleinen Teilchen mit hoher Oberflächenenergie gelöst, während die bereits vorhandenen größeren Teilchen entsprechend den Löslichkeitsverhältnissen noch weiter wachsen. Die resultierende Kornvergrößerung führt schließlich zu Farbstärkeverlust und verminderter Transparenz.

Als Lösemittel, die solche Rekristallisation bewirken, sind in der Praxis vor allem Aromaten wie Toluol und Xylole, aber auch aliphatische Kohlenwasserstoffe wichtig, und selbst in wäßrigen Medien ist dieser Effekt zu beobachten. In einigen Fällen bewirkt sogar die mehrtägige Lagerung der Pigmente in Form wäßriger Preßkuchen deutliche Farbstärkeverluste. Selbst erhöhte Temperatur des Waschwassers beim Waschen der Pigmentpreßkuchen kann gelegentlich zu minderer Farbstärke führen.

In der DE-C-2 012 153 wurde bereits beschrieben, daß Mischkupplungen mit polare Gruppen enthaltenden Kupplungskomponenten die Rekristallisationsstabilität von Monoazopigmenten gegenüber organischen Lösemitteln, insbesondere in Druckfarben, verbessern können. Allerdings erzielt man auch nach jenem Verfahren oft nur eine unzureichende Lösemittelbeständigkeit, vor allem in Lackbindemitteln.

In der JP-B-45-11 026 sind Mischkupplungen mit sulfogruppenhaltigen Komponenten beschrieben, wobei die Produkte mit Erdalkalimetallsalzen bzw. organischen Aminen verlackt wurde, um die Viskosität in Nitrocellulosebindemitteln zu senken. Durch Verlacken mit Erdalkalimetallen wird aber die Rekristallisationsstabilität nicht merklich verändert und die Behandlung mit Aminen führt bei nur mäßiger Rekristallisationsbeständigkeit zu extrem transparenten Produkten von schlechter Lichtechtheit und ungenügender Deckkraft im Lackvollton.

Gegenstand der Erfindung sind demgegenüber besonders rekristallisationsstabile farbstarke Pigmentgemische, nämlich Monoazopigmentgemische, die erhältlich sind durch Kupplung von diazotierten Aminen der Benzolreihe auf Acetessigsäurearylamide, wobei mehr als eine Diazo- und/oder Kupplungskomponente eingesetzt werden und 0,1 bis 20, vorzugsweise 0,5 bis 10, insbesondere 0,5 bis 5 Mol-% der Diazo- und/oder Kupplungskomponente saure Gruppen, vorzugsweise Sulfo- und/oder Carboxygruppen, enthalten, und anschließende Umsetzung der reaktionsfähigen sauren Gruppen des Kupplungsprodukts mit kationenaktiven Verbindungen, insbesondere quarternäre Ammonium- oder Phosphoniumverbindungen.

Gegenstand der Erfindung ist weiterhin ein Verfahren zur Herstellung solcher Gemische, bei dem diazotierte Amine der Benzolreihe auf Acetessigsäurearylamide gekuppelt werden, wobei mehr als eine Diazo- und/oder Kupplungskomponente eingesetzt werden und 0,1 bis 20 Mol-% der Diazo- und/oder Kupplungskomponente saure Gruppen enthalten, das dadurch gekennzeichnet ist, daß die reaktionsfähigen sauren Gruppen des Kupplungsprodukts mit kationaktiven quaternären Verbindungen umgesetzt werden.

Gegenstand der Erfindung ist weiterhin die Verwendung der genannten Monoazopigmentgemische zum Pigmentieren farbloser Substrate, insbesondere zur Herstellung von Lacken, Druckfarben, öligen und wäßrigen Präparationen, wobei sich die so erhaltenen pigmentierten Substrate durch eine wesentlich verbesserte Lager- und Temperaturbeständigkeit und durch eine hohe Farbstärke auszeichnen.

Im folgenden werden bevorzugte Ausgestaltungen der Erfindung näher beschrieben.

Bevorzugte Verfahren sind dadurch gekennzeichnet, daß man entweder Mischungen von Diazoniumverbindungen von Aminen der Benzolreihe, die teilweise saure Gruppen wie Carbonsäure- oder Sulfonsäuregruppen enthalten und in denen der Anteil der die genannten polaren Gruppen enthaltenden Amine etwa 0,5 bis 10 Molprozent beträgt, mit Kupplungskomponenten aus der Reihe der Acetessigsäurearylamide oder Mischungen derselben in einem Molverhältnis von etwa 1 : 1 kuppelt, oder daß man Diazoniumverbindungen v n Aminen der Benzolreihe oder Mischungen derselben mit Mischungen von Kupplungskomponenten aus der Reihe der Acetessigsäurearylamide, die teilweise saure Gruppen wie Carbonsäure- oder Sulfonsäuregruppen enthalten und in denen der Anteil der die genannten polaren Gruppen enthaltenden Kupplungskomponenten etwa 0,5 bis 10 Molprozent beträgt, in einem Molverhältnis von etwa 1 : 1 kuppelt und anschließend die sauren Gruppen, soweit sie an der Oberfläche der Pigmentkristalle liegen und chemischen Reaktionen zugänglich sind, mit kationaktiven quaternären Verbindungen unter Salzbildung umsetzt, wobei 0,1 bis 20, vorzugsweise 0,5 bis 10, insbesondere 0,5 bis 5 Gewichtsprozent an kationaktiven Verbindungen, bezogen auf das Pigment, eingesetzt werden.

Gelegentlich ist es vorteilhaft, sowohl der Diazokomponente als auch der Kupplungskomponente Anteile von die obengenannten polaren Gruppen enthaltenden Verbindungen zuzufügen.

Die erfindungsgemäßen Pigmente stellen folglich Gemische aus zwei oder mehreren Azoverbindungen dar, die dadurch gekennzeichnet sind, daß ein Teil dieser Verbindungen saure Gruppen enthält, und zwar insbesondere Carbonsäure- oder Sulfonsäuregruppen, und daß die frei zugänglichen und reaktionsfähigen sauren Gruppen zumindest teilweise salzartig mit organischen Kationen umgesetzt sind.

Werden dagegen die getrennt hergestellten Einzelverbindungen in den entsprechenden Molverhältnissen mechanisch gemischt, etwa durch Vermahlen, und anschließend mit kationaktiven quaternären Verbindungen behandelt, so werden Pigmentmischungen erhalten, die nicht die bei den erfindungsgemäß hergestellten Pigmentgemischen gegebenen Verbesserungen der anwendungstechnischen Eigenschaften zeigen.

Als Amine der Benzolreihe seien die Abkömmlinge des 2-Nitroanilins und des 4-Nitroanilins, die noch durch eine oder mehrere Gruppen, wie Halogenatome, Methyl-, Trifluormethyl- oder Methoxygruppen oder weitere Nitrogruppen substituiert sein können sowie die Mono- und Polyhalogenaniline genannt.

Beispiele für saure Gruppen enthaltende Amine der Benzolreihe sind die isomeren Aminobenzolsulfosäuren, die durch weitere Gruppen wie Halogenatome, Trifluormethylgruppen, Methylgruppen und Nitrogruppen substituiert sein können, wobei insbesondere die 2-Amino-benzolsulfosäure, die 3-Amino-benzolsulfosäure, die 4-Amino-benzolsulfosäure, die 3-Nitro-4-amino-benzolsulfosäure und die 2-Amino-4-chlorbenzolsulfosäure genannt seien, und weiterhin die isomeren Aminobenzoesäuren, die ebenfalls durch zusätzliche Gruppen wie Halogen, Trifluormethyl-, Methyl- oder/und Nitrogruppen substituiert sein können.

Aus der Reihe der Acetessigsäurearylamide sind z. B. zu nennen Acetoacetylamino-benzol, 2-Acetoacetylamino-toluol, 4-Acetoacetylamino-toluol, 2-Acetoacetylamino-anisol, 4-Acetoacetylaminoanisol, 2-Acetoacetylamino-phenetol, 4-Acetoacetylamino-phenetol, 1-Acetoacetylamino-2,4-dimethylbenzol, 1-Acetoacetylamino-2,4-dimethoxybenzol, 1-Acetoacetylamino-2,5-dimethoxy-benzol, 1-Acetoacetylamino-2,5-dichlorbenzol, 1-Acetoacetylamino-2,5-dimethoxy-4-chlorbenzol, 5-Chlor-2-acetoacetylamino-toluol und 3-Chlor-4-acetoacetylamino-toluol.

Als Beispiele für Kupplungskomponenten aus der Reihe der Acetessigsäurearylamidderivate mit sauren Gruppen seien genannt: 2-Acetoacetylamino-benzoesäure, 3-Acetoacetylamino-benzoesäure, 4-Acetoacetylamino-benzoesäure, 2-Acetoacetylamino-toluol-4-carbonsäure, 3-Acetoacetylamino-toluol-4-carbonsäure, 2-Chlor-4-acetoacetylaminobenzoesäure, 3-Chlor-4-acetoacetylamino-benzoesäure, 1-Acetoacetylaminobenzol-3,5-dicarbonsäure, 4-Acetoacetylaminophenyl-essigsäure, 2-Acetoacetylamino-benzolsulfosäure, 3-Acetoacetylamino-benzolsulfosäure oder 4-Acetoacetylaminobenzolsulfosäure.

An kationaktiven quaternären Verbindungen seien folgende Beispiele genannt, wobei die zugehörigen Anionen je nach Herstellungsart der kationischen organischen Verbindungen verschieden sein können, wie zum Beispiel Halogenid, Sulfat, Alkoxysulfat, Alkoxyphosphat und Gemische hieraus:

Permethyliertes Talgfettpropylendiamin, Distearyldimethylammonium, Didecyldimethylammonium, Hexadecyltrimethylammonium, Dicocosalkyldimethylammonium, Cocosalkyl-2,4-dichlorbenzyl-dimethylammonium, Stearylbenzyldimethylammonium, Di-$\beta$-palmitinsäureisopropylesterdimethylammonium, permethyliertes N-Stearoyldiäthylentriamin, permethyliertes N-Stearoyltriäthylentetramin, Laurylpyridinium, 2-Hydroxy-5-chlor-1,3-xylylenbispyridinium, 2-Hydroxy-5-isooctyl-1,3-xylylen-bispyridinium, 2-Hydroxy-5-t-butyl-1,3-xylylen-bispyridinium, 2-Hydroxy-5-n-nonyl-1,3-xylylen-bispyridinium, 2-Methoxy-5-isooctyl-1,3-xylylen-bispyridinium, 2-Hydroxy-5-isooctyl-1,3-xylylen-bischinolinium, 2-Hydroxy-5-isooctyl-1,3-xylylen-bisisochinolinium, Hexadecyltributylphosphonium, Äthyltrioctylphosphonium, Tetrabutylphosphonium.

Die organischen kationaktiven Verbindungen können im stöchiometrischen Verhältnis zu den eingesetzten sauren Gruppen angewendet werden, aber auch im Über- oder Unterschuß. Bevorzugt sind Mengen von 0,5 bis 3 Gewichtsprozent, bezogen auf das Pigmentgemisch.

Die Herstellung der erfindungsgemäßen Pigmentgemische erfolgt durch Kupplung in an sich bekannter Weise, vorzugsweise durch Vereinigung der Diazoniumverbindungen mit den Kupplungskomponenten in wäßrigem Medium, wobei unter Umständen ein Zusatz von grenzflächenaktiven Netz- und Dispergiermitteln vorteilhaft sein kann.

Die Diazoniumsalzlösungen mit Anteilen von polare Gruppen enthaltenden Diazoniumsalzen erhält

3

### Beispiel 6a

2 Teile einer Mischung von permethyliertem N-Stearoyl-diäthylentriamin-chlorid und permethyliertem N-Stearoyl-triäthylentetramin-chlorid (Mischungsverhältnis 3 : 1).

### Beispiel 6b

2 Teile permethyliertes Talgfettpropylendiamin-chlorid.

### Beispiel 6c

2 Teile N-Lauryl-pyridinium-chlorid.

### Beispiel 6d

2 Teile 2-Hydroxy-5-isooctyl-1,3-xylylen-bispyridinium-chlorid.

### Beispiel 6e

2 Teile 2-Methoxy-5-isooctyl-1,3-xylylen-bispyridinium-chlorid.

### Beispiel 6f

2 Teile 2-Hydroxy-5-isooctyl-1,3-xylylen-bischinolinium-chlorid.

### Beispiel 6g

2 Teile 2-Hydroxy-5-isooctyl-1,3-xylylen-bisisochinolinium-chlorid.

### Beispiel 6h

2 Teile Hexadecyltributylphosphoniumbromid.

### Beispiel 6i

2 Teile Äthyltrioctylphosphoniumbromid.

### Beispiel 6j

2 Teile Tetrabutylphosphoniumbromid.

### Beispiel 7

17,3 Teile 4-Chlor-2-nitroanilin und 0,22 Teile 2-Nitroanilin-4-sulfosäure werden in 40 Teilen Wasser und 30,4 Teilen 31%iger Salzsäure mehrere Stunden angerührt. Anschließend versetzt man mit Eis und tropft binnen 30 Minuten 17,4 Teile 40%ige Natriumnitritlösung bei 0 bis 18° C zu. Nach dem Klären der so erhaltenen Diazoniumsalzlösung evtl. unter Zusatz von Klärhilfsmittel wird überschüssiges Nitrit durch Zugabe einer ausreichenden Menge Amidosulfosäure entfernt.

23,7 Teile Acetessig-5-chlor-2-toluidid werden in 200 Teilen Wasser angerührt und dann durch Zusatz von 20,4 Teilen 33%iger Natronlauge gelöst und bei 12 bis 15° C durch Zutropfen von 11 Teilen Eisessig ausgefällt.

Die Kupplung erfolgt bei 30° C binnen 2 Stunden derart, daß die Diazoniumsalzlösung unter die Oberfläche der Kupplungskomponentensuspension zuläuft. Nach dem Auskuppeln gibt man 1 Teil einer Mischung von permethyliertem N-Stearoyl-diäthylentriaminchlorid und permethyliertem N-Stearoyltriäthylentetramin-chlorid (Mischungsverhältnis 3 : 1) zu, heizt auf 60° C, filtriert, wäscht mit Wasser und trocknet bei 70°C im Umlufttrockenschrank. Nach dem Mahlen erhält man ein gelbes Pigmentpulver.

## Beispiel 7a

Wie Beispiel 7, aber ohne quartäre Ammoniumsalze.

## Beispiel 7b

Wie Beispiel 7, aber ohne Zusatz von 2-Nitroanilin-4-sulfosäure.

## Beispiel 7c

In Abänderung von Beispiel 7 wird ein Vergleichspigment ohne Zusatz von 2-Nitroanilin-4-sulfosäure und ohne quartäre Ammoniumsalze hergestellt:

Bei der Prüfung der Rekristallisationsbeständigkeit analog Beispiel 1 bis 1c zeigt sich eine deutliche Stabilitätsverbesserung bei 7 gegenüber 7a. 7b und 7c sind nochmals wesentlich schlechter beständig als 7a und untereinander etwa gleich.

## Beispiel 8

16,8 Teile 5-Nitro-2-amino-anisol und 0,22 Teile 2-Nitroanilin-4-sulfosäure werden in einer Mischung aus 40 Teilen Wasser und 30,4 Teilen 31%iger Salzsäure mehrere Stunden gerührt. Anschließend versetzt man mit 100 Teilen Eis und gibt dann binnen 5 Minuten 17,4 Teile 40%ige Natriumnitritlösung unter die Oberfläche zu. Man rührt ca. 2 Stunden nach bei Temperaturen von 0 bis 10°C und klärt anschließend unter Zusatz von 1,5 Teilen Kieselgur. 21,3 Teile Acetessigsäure-o-anisidid werden in 300 Teilen Wasser angerührt und durch Zusatz von 20 Teilen 33%iger Natronlauge gelöst. Man fällt mit 6 Teilen Eisessig und stellt mit 15 Teilen 31%iger Salzsäure auf pH 5.

Die Kupplung erfolgt bei 5 bis 10°C derart, daß die Diazoniumsalzlösung unter die Oberfläche der Kupplungskomponentensuspension zuläuft, während der pH-Wert durch Zugabe von ca. 100 Teilen 6%iger Natronlauge bei 5 gehalten wird. Präparation mit 1 Teil Ammoniumsalzgemisch und Aufarbeitung erfolgen analog Beispiel 7.

## Beispiel 8a

Wie Beispiel 8, aber ohne quartäre Ammoniumsalze.

## Beispiel 8b

Wie Beispiel 8, aber ohne Zusatz von 2-Nitroanilin-4-sulfosäure.

## Beispiel 8c

In Abänderung von Beispiel 8 wird ein Vergleichspigment ohne Zusatz von 2-Nitroanilin-4-sulfosäure und ohne quartäre Ammoniumsalze hergestellt.

Bei der Prüfung der Rekristallisationsbeständigkeit analog Beispiel 1 bis 1c liegen 8b und 8c am schlechtesten, 8a ist etwas besser und das nach Beispiel 8 erhaltene Pigment zeigt hervorragende Stabilität.

## Beispiel 9

Ersetzt man in Beispiel 8 bis 8c das 5-Nitro-2-amino-anisol durch das 3-Nitro-4-amino-anisol, so gelangt man zu einer Pigmentreihe mit vergleichbarer Stabilitätsabstufung.

## Beispiel 10

Eine Mischung von 17,3 Teilen 4-Chlor-2-nitroanilin und 0,22 Teilen 2-Nitroanilin-4-sulfosäure wird diazotiert und geklärt wie in Beispiel 7 beschrieben.

Eine Suspension von 21,3 Teilen Acetessigsäure-o-anisidid wird hergestellt wie in Beispiel 8 beschrieben.

Die Kupplung erfolgt bei 20°C derart, daß die Diazoniumsalzlösung unter die Oberfläche der Kupplungskomponentensuspension zuläuft. Der pH-Wert wird durch Zugabe von Natronlauge bei 4 bis 4,5 gehalten. Präparation mit 1 Teil Ammoniumsalzgemisch und Aufarbeitung erfolgen analog Beispiel 7.

## Beispiel 10a

Wie Beispiel 10, aber ohne quartäre Ammoniumsalze.

## Beispiel 10b

Wie Beispiel 10, aber ohne Zusatz von 2-Nitroanilin-4-sulfosäure.

## Beispiel 10c

In Abänderung von Beispiel 10 wird ein Vergleichspigment ohne Zusatz von 2-Nitroanilin-4-sulfosäure und ohne quartäre Ammoniumsalze hergestellt.

Bei der Prüfung der Rekristallisationsbeständigkeit analog Beispiel 1 bis 1c liegen 10b und 10c am ungünstigsten. 10a ist etwas stabiler und das nach Beispiel 10 hergestellte Pigment zeigt ausgezeichnete Beständigkeit.

## Beispiel 11

Eine Mischung von 33,7 Teilen 3-Nitro-4-amino-anisol und 0,44 Teilen o-Nitroanilin-p-sulfosäure werden in 100 Teilen 5 N-Salzsäure mehrere Stunden angerührt. Anschließend versetzt man mit 100 Teilen Eis und tropft 34,7 Teile 40%ige Natriumnitritlösung zu. Man klärt die so entstandene Diazoniumsalzlösung unter Zusatz von 0,5 Teilen Kieselgur und 1 Teil Bleicherde.

Man rührt 39 Teile Acetessigsäure-o-toluidid in 800 Teilen Wasser ein, löst es durch Zusatz von 27,2 Teilen 33%iger Natronlauge und fällt es wieder mit 5 Teilen Natriumacetat.

Die Kupplung erfolgt bei 30°C binnen 2 Stunden derart, daß die Diazoniumsalzlösung unter die Oberfläche der Kupplungskomponentensuspension läuft. Durch gleichzeitige Zugabe von 6%iger Natronlauge wird der pH-Wert bei 6 gehalten. Präparation mit 2 Teilen Ammoniumsalzgemisch und Aufarbeitung erfolgen analog Beispiel 1.

## Beispiel 11a

Wie Beispiel 11, aber ohne quartäre Ammoniumsalze.

## Beispiel 11b

Wie Beispiel 11, aber ohne Zusatz von 2-Nitroanilin-4-sulfosäure.

## Beispiel 11c

In Abänderung von Beispiel 11 wird ein Vergleichspigment ohne Zusatz von 2-Nitroanilin-4-sulfosäure und ohne quartäre Ammoniumsalze hergestellt.

Bei der Prüfung der Rekristallisationsbeständigkeit analog Beispiel 1 bis 1c erweisen sich 11b und 11c als instabiler als 11a, welches wiederum durch das nach Beispiel 11 hergestellte Pigmentgemisch in der Beständigkeit noch wesentlich übertroffen wird.

Beispiel 12

Es wurde ein Pigment nach Beispiel 1 hergestellt mit dem Unterschied, daß statt 2-Nitroanilin-4-sulfosäure 1 Teil 3-Nitro-4-aminobenzoesäure eingesetzt wird.

Auch in diesem Fall zeigt ein Vergleichspigment ohne Zusatz der Mischung aus permethyliertem N-Stearoyl-diäthylentriamin-chlorid und permethyliertem N-Stearoyl-triäthylentetramin-chlorid, das analog Beispiel 1a erhalten wird, wesentlich schlechtere Rekristallisationsstabilität.

Beispiel 13

Eine Mischung von 31 Teilen 4-Chlor-2-nitroanilin und 4,36 Teilen 2-Nitroanilin-4-sulfosäure wird diazotiert und auf eine Suspension von 43,25 Teilen Acetessigsäure-2-chloranilid gekuppelt wie im Beispiel 1 beschrieben. Nach Präparation mit 8 Teilen des im Beispiel 1 beschriebenen Ammoniumsalzgemisches erhält man ein äußerst rekristallisationsstabiles Pigment.

Beispiel 14

Es wird nach der Vorschrift von Beispiel 3 gearbeitet mit dem Unterschied, daß 8 Teile permethyliertes Talgfettpropylendiamin-chlorid zur Präparation verwendet werden. Das resultierende Pigmentgemisch ist ebenfalls sehr rekristallisationsstabil.

**Patentansprüche**

1. Monoazopigmentgemische, erhältlich durch Kupplung von diazotierten Aminen der Benzolreihe auf Acetessigsäurearylamide, wobei mehr als eine Diazo- und/oder Kupplungskomponente eingesetzt werden und 0,1 bis 20 Mol-% der Diazo- und/oder Kupplungskomponente saure Gruppen enthalten, und anschließende Umsetzung der reaktionsfähigen sauren Gruppen des Kupplungsprodukts mit quaternären kationaktiven Verbindungen.

2. Gemische nach Anspruch 1, worin der Anteil der sauren Gruppen 0,5 bis 10 Mol-% beträgt.

3. Gemische Anspruch 1 und 2, worin der Anteil der sauren Gruppen 0,5 bis 5 Mol-% beträgt.

4. Gemische nach Anspruch 1 bis 3, worin die sauren Gruppen Sulfo- oder/und Carboxygruppen sind.

5. Gemische nach Anspruch 1 bis 4, worin die kationaktiven Verbindungen quarternäre Ammonium- oder Phosphoniumverbindungen sind.

6. Gemische nach Anspruch 1 bis 5, dadurch gekennzeichnet, daß das Amin der Benzolreihe ein Nitroanilin ist, das durch Halogenatome, Methyl-, Trifluormethyl- und/oder Methoxygruppen sowie weitere Nitrogruppen substituiert sein kann.

7. Gemische nach Anspruch 1 bis 5, dadurch gekennzeichnet, daß das Amin der Benzolreihe ein Mono- oder Polyhalogenanilin ist.

8. Gemische nach Anspruch 1 bis 7, dadurch gekennzeichnet, daß das Acetessigsäurearylamid das Anilid ist, das durch Halogenatome, Methyl- und/oder Methoxygruppen substituiert sein kann.

9. Verfahren zur Herstellung der Monoazopigmentgemische nach Anspruch 1 durch Kupplung von diazotierten Aminen der Benzolreihe auf Acetessigsäurearylamide, wobei mehr als eine Diazo- und/oder Kupplungskomponente eingesetzt werden und 0,1 bis 20 Mol-% der Diazo- und/oder Kupplungskomponente saure Gruppen enthalten, dadurch gekennzeichnet, daß die reaktionsfähigen sauren Gruppen des Kupplungsprodukts mit kationaktiven quaternären Verbindungen umgesetzt werden.

10. Verwendung der Monoazopigmentgemische nach Anspruch 1 zur Herstellung von Lacken, Druckfarben, öligen und wäßrigen Präparationen.

**Claims**

1. Monoazo pigment mixtures obtainable by coupling diazotizeed amines of the benzene series onto acetoacetic acid arylamides, wherein more than one diazo and/or coupling component is applied and from 0.1 to 20 molar % of the diazo and/or coupling component contain acid groups, and by subsequent reaction of the reacitve acid groups of the coupling product with a quaternary cation-active compound.

2. Mixtures according to claim 1, wherein the proportion of the acid groups is from 0.5 to 10 molar %.

3. Mixtures according to claims 1 and 2, wherein the proporation of the acid groups is from 0.5 to 5 molar %.

4. Mixtures according to claims 1 to 3, wherein the acid groups are sulfo and/or carboxy groups.

5. Mixtures according to claims 1 to 4, wherein the cation-active compounds are quaternary ammonium or phosphonium compounds.

6. Mixtures according to claims 1 to 5, characterized in that the amine of the benzene series is a nitroaniline which can be substituted by halogen atoms, methyl, trifluoromethyl and/or methoxy groups as well as further nitro groups.

7. Mixtures according to claims 1 to 5, characterized in that the amine of the benzene series is a mono- or polyhalogen aniline.

8. Mixtures according to claims 1 to 7, characterized in that the acetoacetic acid arylamide is the anilide which can be substituted by halogen atoms, methyl and/or methoxy groups.

9. Process for the preparation of monoazo pigment mixtures according to claim 1 by coupling diazotized amines of the benzene series onto acetoacetic acid arylamides, wherein more than one diazo and/or coupling component is applied and from 0.1 to 20 molar % of the diazo and/or coupling component contain acid groups, characterized by reacting the reactive acid groups of the coupling product with cationic quaternary compounds.

10. Use of monoazo pigment mixtures according to claim 1 for the preparation of varnishes, printing inks, oily and aqueous preparations.

## Revendications

1. Mélanges de pigments monoazoïques qui peuvent être obtenus par copulation de diazoïques d'amines de la série benzénique sur des arylamides de l'acide acétylacétique, les composantes utilisées étant telles qu'il y ait plus d'un diazotant et/ou copulant et que de 0,1 à 20% en moles des diazotant et/ou copulant contiennent des groupes acides, puis par réaction des groupes acides réactifs du produit de copulation avec des composés quaternaires à cations actifs.

2. Mélanges selon la revendication 1 dans lesquels la proportion des groupes acides est de 0,5 à 10% en moles.

3. Mélanges selon l'une des revendications 1 et 2 dans lesquels la proportion des groupes acides est de 0,5 à 5% en moles.

4. Mélanges selon l'une quelconque des revendications 1 à 3, dans lesquels les groupes acides sont des groupes sulfo et/ou carboxy.

5. Mélanges selon l'une quelconque des revendications 1 à 4, dans lesquels les composés à cations actifs sont des composés d'ammoniums ou de phosphoniums quaternaires.

6. Mélanges selon l'une quelconque des revendications 1 à 5, caractérisés en ce que l'amine de la série benzénique est une nitraniline qui peut porter des atomes d'halogènes et/ou des radicaux méthyles, trifluorométhyles et/ou méthoxy ainsi que d'autres groupes nitro.

7. Mélanges selon l'une quelconque des revendications 1 à 5, caractérisés en ce que l'amine de la série benzénique est une monohalogéno-aniline ou une polyhalogéno-aniline.

8. Mélanges selon l'une quelconque des revendications 1 à 7, caractérisés en ce que l'arylamide de l'acide acétylacétique est l'anilide, lequel peut porter comme substituants des atomes d'halogènes et/ou des radicaux méthyles et/ou méthoxy.

9. Procédé de préparation de mélanges de pigments monoazoïques selon la revendication 1, par copulation de diazoïques d'amines de la série benzénique sur des arylamides de l'acide acétylacétique, plus d'un diazotant et/ou copulant étant mis en jeu et de 0,1 à 20% en moles des diazotant et/ou copulant contenant des groupes acides, procédé caractérisé en ce qu'on fait réagir les groupes acides réactifs du produit de copulation avec des composés quaternaires à cations actifs.

10. Utilisation des mélanges de pigments monoazoïques selon la revendication 1 pour la préparation de peintures, d'encres d'imprimerie, et de compositions huileuses et aqueuses.